# NEUE EUROPÄISCHE PATENTSCHRIFT

(11) **EP 2 286 897 B2**
(45) Veröffentlichungstag und Bekanntmachung des Hinweises auf die Entscheidung über den Einspruch: **03.10.2018**
(45) Hinweis auf die Patenterteilung: 11.07.2012
(21) Anmeldenummer: 10014425.2
(22) Anmeldetag: 10.06.2003
(51) Int. Cl.: B01D 53/86, B01J 8/00, B01J 8/04, B01J 8/02, B01J 19/30, B01J 29/06, B01J 29/08, B01J 29/18, B01J 29/46, B01J 29/65, B01J 29/70

(54) **Vorrichtung zur Verringerung des Gehaltes an NOx und N2O in Gasen**
Device for reducing the NOx and N2O content of gases
Dispositif de réduction de la teneur en NOx et N2O dans des gaz

(30) Priorität: 13.06.2002 DE 10226461
(43) Veröffentlichungstag der Anmeldung: 23.02.2011
(62) Teilanmeldung aus: 03735591.4
(73) Patentinhaber: thyssenkrupp Industrial Solutions AG, 45143 Essen (DE)
(72) Erfinder: Schwefer, Meinhard, Dr., 59872 Meschede (DE); Groves, Michael, 58285 Gevelsberg (DE); Siefert, Rolf, Dr., 33378 Rheda-Wiedenbrück (DE); Maurer, Rainer, 58332 Schwelm (DE)
(74) Vertreter: Loock, Jan Pieter

(56) Entgegenhaltungen:
- WO-A-01/51181
- WO-A-02/068098
- WO-A1-96/01689
- US-A- 3 733 181
- US-A- 4 405 562
- US-A- 5 053 210
- US-A- 5 482 692
- US-A1- 2002 039 550
- "La réduction catalytique par l'ammoniac des oxydes d'azote produit par une unité d'acide nitrique", P- Gry and M. prat, technischer Kongress der IFA 1990, Venedig, TF90/14, 1990
- COQ B. ET AL: 'The simultaneous catalytic reduction of NO and N2O by NH3 using an Fe-zeolite-beta catalyst' APPLIED CATALYSIS B: ENVIRONMENTAL Bd. 27, 2000, Seiten 193 - 198
- LONG R.Q. ET AL: 'Superior Fe-ZMS-5 catalyst for selective catalytic reduction of nitric oxide by ammonia' J. AM. CHEM. SOC. Bd. 121, 1999, Seiten 5595 - 5596
- MAUVEZIN M. ET AL: 'N2O decomposition in the presence of ammonia on faujasite-supported metal catalyst' APPLIED CATALYSIS B: ENVIRONMENTAL Bd. 23, 1999, Seiten L79 - L82
- "Réduction catalytique sélective des NOx et de N2O par NH13 sur Fe-FER", S. Kieger et al., NOx Konferenz, 21.-22.03.2001
- WEITKAMP J. ET AL: 'Catalysis and Zeolites-fundamentals and applications', 1999, SPRINGER VERLAG, BERLIN Seiten 142-145 - 206, 207, 256-259
- Europäische Norm EN ISO 10628, 1997
- ZLOKARNIK M.: 'Rührtechnik: Theorie und Praxis', 1999, SPRINGER VERLAG, BERLIN Seiten 286 - 287

## Beschreibung

Die vorliegende Erfindung betrifft eine Vorrichtung zum Betrieb von Verfahren zur Verringerung Gehaltes an Stickoxiden in Gasen, insbesondere in Prozess- und Abgasen.

Bei vielen Prozessen, wie z.B. Verbrennungsprozessen oder bei der industriellen Herstellung von Salpetersäure resultiert ein mit Stickstoffmonoxid NO, Stickstoffdioxid NO₂ (zusammen bezeichnet als NOₓ) sowie Lachgas N₂O beladenes Abgas. Während NO und NO₂ seit langem als Verbindungen mit ökotoxischer Relevanz bekannt sind (Saurer Regen, Smog-Bildung) und weltweit Grenzwerte für deren maximal zulässige Emissionen festgelegt sind, rückt in den letzten Jahren in zunehmenden Maße auch Lachgas in den Focus des Umweltschutzes, da dieses in nicht unerheblichem Maße zum Abbau von stratosphärischem Ozon und zum Treibhauseffekt beiträgt. Es besteht daher aus Gründen des Umweltschutzes ein dringender Bedarf an technischen Lösungen, die Lachgasemissionen zusammen mit den NOₓ-Emissionen zu beseitigen.

Zur separaten Beseitigung von N₂O einerseits und andererseits sind bereits zahlreiche Möglichkeiten bekannt.

Bei der NOₓ-Reduktion ist die selektive katalytische Reduktion (SCR) von NOₓ mittels Ammoniak in Gegenwart vanadiumhaltiger TiO₂-Katalysatoren hervorzuheben (vgl. etwa G. Ertl, H. Knözinger J. Weitkamp: Handbook of Heterogeneous Catalysis, Vol. 4, Seiten 1633-1668, VCH Weinheim (1997)). Diese kann je nach Katalysator bei Temperaturen von ca. 150°C bis ca. 450°C ablaufen und ermöglicht einen NOₓ-Abbau von mehr als 90%. Sie ist die meist genutzte Variante der NOₓ-Minderung aus Abgasen industrieller Prozesse.

Auch auf Basis von Zeolith-Katalysatoren finden sich Verfahren zur Reduktion von NOₓ, die unter Verwendung verschiedenster Reduktionsmittel ablaufen. Neben Cuausgetauschten Zeolithen (vergl. z.B. EP-A-0914866) scheinen vor allem eisenhaltige Zeolithe für praktische Anwendung von Interesse.

So beansprucht US-A- 4,571,329 ein Verfahren zur Reduktion von NOₓ in einem Gas, welches zu mindestens 50% aus NO₂ besteht, mittels Ammoniak in Gegenwart eines Fe-Zeolithen. Das Verhältnis von NH₃ zu NO₂ beträgt mindestens 1,3. Gemäß des hier beschriebenen Verfahrens sollen NOₓ-enthaltende Gase mit Ammoniak reduziert werden, ohne dass es zur Bildung von N₂O als Nebenprodukt kommt.

US 5,451,387 beschreibt ein Verfahren zur selektiven katalytischen Reduktion von NOₓ mit NH₃ über eisenausgetauschten Zeolithen, welches bei Temperaturen um 400°C arbeitet.

Im Unterschied zur NOₓ- Minderung in Abgasen, die seit vielen Jahren in der Technik etabliert ist, existieren zur N₂O-Beseitigung nur wenige technische Prozesse, die zumeist auf einen thermischen oder katalytischen Abbau des N₂O abzielen. Eine Übersicht über die Katalysatoren, deren prinzipielle Eignung zum Abbau und zur Reduktion von Lachgas nachgewiesen wurde, gibt Kapteijn et al. (Kapteijn F. et al., Appl. Cat. B: Environmental 9 (1996) 25-64).

Als besonders geeignet erscheinen wiederum Fe- und Cu-Zeolith-Katalysatoren, die entweder eine reine Zersetzung des N₂O in N₂ und O₂ bewirken (US-A-5,171,553), oder auch zur katalytischen Reduktion des N₂O mit Hilfe von NH₃ oder Kohlenwasserstoffen zu N₂ und H₂O bzw. CO₂ dienen.

So wird in JP-A-07 060 126 ein Verfahren zur Reduktion von N₂O mit NH₃ in Gegenwart von eisenhaltigen Zeolithen vom Pentasil-Typ bei Temperaturen von 450°C beschrieben. Der mit diesem Verfahren erreichbare N₂O-Abbau liegt bei 71 %.

Mauvezin et al. geben in Catal. Lett. 62 (1999) 41-44 eine diesbezügliche Übersicht über die Eignung verschiedener, eisenausgetauschter Zeolithe vom Typ MOR, MFI, BEA, FER, FAU, MAZ und OFF. Danach kann eine mehr als 90%ige N₂O-Reduktion durch NH₃-Zugabe unterhalb von 500°C nur im Falle von Fe-BEA erreicht werden.

Neben den zuvor genannten Verfahren zur separaten Beseitigung von N₂O und NOₓ existieren aber auch Verfahren zur kombinierten Beseitigung, die unter Verwendung eines einzigen Katalysators ablaufen können.

Aus der WO-A-00/48715 ist ein Verfahren bekannt, bei dem ein NOₓ und N₂O enthaltendes Abgas bei Temperaturen zwischen 200 und 600°C über einen Eisen-Zeolith-Katalysator vom Typ Beta (= Typ BEA) geleitet wird, wobei das Abgas außerdem NH₃ in einem Mengenverhältnis zwischen 0,7 und 1,4 bezogen auf die Gesamtmenge an NOₓ und N₂O enthält. NH₃ dient hier als Reduktionsmittel sowohl für NOₓ als auch für N₂O. Das Verfahren arbeitet zwar bei Temperaturen von kleiner als 500°C, besitzt aber wie das vorgenannte Verfahren den prinzipiellen Nachteil, dass zur Beseitigung des N₂O Gehaltes eine in etwa äquimolare Menge an Reduktionsmittel (hier NH₃) benötigt wird.

Aus der WO-A-01/51,181 ist ein Verfahren zur Beseitigung von ein NOₓ und N₂O bekannt, worin ein Prozess- oder Abgas durch zwei Reaktionszonen geleitet, die mit Eisen beladene Zeolithe als Katalysatoren enthalten. In der ersten Reaktionszone wird dabei N₂O abgebaut, zwischen der ersten und der zweiten Reaktionszone wird dem Gasgemisch Ammoniak zugesetzt und in der zweiten Reduktionszone wird NOₓ reduziert.

Es wurde jetzt überraschenderweise gefunden, dass die Effektivität des oben genannten Verfahrens deutlich gesteigert werden kann, wenn die Minderung des N₂O-Gehaltes bis zum gewünschten Abbaugrad nicht alleinig in der ersten Reaktionszone erfolgt, sondern auch die Reaktionszone der NOₓ-Reduktion zur N₂O-Minderung genutzt werden kann. Dieses wurde möglich, seitdem überraschend festgestellt wurde, dass bei Verwendung von Eisen-beladenen Zeolith-Katalysatoren eine simultane NOₓ-Reduktion (z.B. mittels NH₃) und N₂O-Zersetzung möglich ist. Der Beitrag zur N₂O-Zersetzung in der zweiten Reaktionsstufe ist dann besonders groß, wenn das Verfahren bei erhöhten Drucken, d.h. bei Drucken oberhalb von 2 bar, vorzugsweise oberhalb von 4 bar betrieben wird.

Aufgabe der vorliegenden Erfindung ist es, eine Vorrichtung zur Verfügung zu stellen, mit der einfache, aber wirtschaftliche Verfahren betrieben werden können, die gute Umsätze sowohl für den NOₓ- als auch für den N₂O-Abbau liefern und sich durch minimale Betriebs- und Investitionskosten auszeichnen. Zu ersteren zählen neben der Energie zur Einstellung der notwendigen Betriebstemperatur der Verbrauch an Reduktionsmittel sowie Energieverluste durch Strömungswiderstände im Katalysatorbett (Druckverluste). Die Investitionskosten werden wesentlich bestimmt durch die benötigten Mengen an Katalysator und die damit verbundenen Apparatevolumina.

Zusätzlich besteht das Problem der Einbringung des Reduktionsmittels, welches mit dem zu behandelnden Gasstrom innig gemischt werden muss, um einem möglichst hohen Wirkungsgrad des Reduktionsmittels zu gewährleisten (Vermeidung von Schlupf und Nebenreaktionen). Der hierzu notwendige Mischer sollte aus aufstellungstechnischen und wirtschaftlichen Erwägungen möglichst platzsparend angeordnet sein.

Diese Aufgaben werden durch die erfindungsgemäße Vorrichtung gelöst.

Mit der nachstehend beschriebenen Vorrichtung kann insbesondere ein Verfahren zur Minderung des Gehalts von NOₓ und N₂O in Gasen, insbesondere in Prozessgasen und Abgasen, durchgeführt werden, das folgende Massnahmen umfasst:
a) Leiten des N₂O und NOₓ enthaltenden Gases über eine Folge zweier Katalysatorbetten enthaltend einen oder mehrere mit Eisen beladene Zeolithe,
b) Zugabe eines Reduktionsmittels für NOₓ zwischen den Katalysatorbetten,
c) Einstellen einer Temperatur von weniger als 500°C im ersten Katalysatorbett und zweiten Katalysatorbett,
d) Einstellen eines Gasdruckes von mindestens 2 bar in den beiden Katalysatorbetten,
e) Auswahl einer solchen Raumgeschwindigkeit im ersten und zweiten Katalysatorbett, so dass im ersten Katalysatorbett ein Abbau des N₂O-Gehalts des Gases um höchstens bis zu 90%, bezogen auf den N₂O Gehalt am Eingang des ersten Katalysatorbettes, erfolgt und dass im zweiten Katalysatorbett ein weiterer Abbau des N₂O-Gehalts des Gases um mindestens 30%, bezogen auf den N₂O Gehalt am Eingang des zweiten Katalysatorbettes, erfolgt.

Im ersten Katalysatorbett zur reinen N₂O-Zersetzung beschleunigt dabei das noch im Gas vorhandene NOₓ erwartungsgemäß die gewünschte N₂O Zersetzung durch eine aktivierende Wirkung, wie diese für unterschiedliche N₂O/NOₓ-Verhältnisse von Kögel et al. in Catal. Comm. 2 (2001)273-6 beschrieben wurde.

Aber auch im zweiten Katalysatorbett kann ein merklicher N₂O-Abbau durch Zersetzung in Stickstoff und Sauerstoff erreicht werden. Dies war überraschend, da zum einen der NOₓ-Gehalt, welcher die N₂O-Zersetzung aktiviert, durch Zugabe des Reduktionsmittels reduziert wird und zum anderen erwartet wurde, dass das zugesetzte Reduktionsmittel intermediär auf der Katalysatoroberfläche adsorbiert und damit die aktiven Zentren zur N₂O Zersetzung blockiert.

Unter den gewählten Verfahrensbedingungen, also den erhöhten Drücken und insbesondere einem reduzierten Verhältnis NH₃/NOₓ kommen diese Einflüsse aber offenbar nicht zum Tragen.

Das in der erfindungsgemäßen Vorrichtung bevorzugt durchgeführte Verfahren ermöglicht es damit, sowohl die Zersetzung von N₂O, als auch die Reduktion von NOₓ bei einer niedrigen Betriebstemperatur und wirtschaftlichen Raumgeschwindigkeiten durchzuführen und gleichzeitig hohe Abbauraten von N₂O und NOₓ zu erzielen.

Unter dem Begriff Raumgeschwindigkeit ist dabei der Quotient aus Volumenanteilen Gasgemisch (gemessen bei 0 °C und 1,014 bara) pro Stunde bezogen auf einen Volumenanteil Katalysator zu verstehen. Die Raumgeschwindigkeit kann somit über den Volumenstrom des Gases und/oder über die Katalysatormenge eingestellt werden.

Das mit Stickstoffoxiden beladene Gas wird üblicherweise mit einer Raumgeschwindigkeit von 200 bis 200.000 h⁻¹, vorzugsweise von 5.000 bis 100.000 h⁻¹, insbesondere von 5.000 bis 50.000 h⁻¹, bezogen auf das addierte Katalysatorvolumen beider Katalysatorbetten, über den Katalysator geleitet.

Nach Verlassen des ersten Katalysatorbettes liegt der Gehalt an N₂O nach dem in der erfindungsgemäßen Vorrichtung bevorzugt durchgeführten Verfahren vorzugsweise oberhalb von 200 ppm, insbesondere oberhalb von 300 ppm. Im ersten Katalysatorbett erfolgt eine höchstens 90 %ige, vorzugsweise höchstens 80%ige Minderung des zu Beginn des ersten Katalysatorbettes vorhandenen N₂O-Gehaltes.

Nach dem Verlassen des ersten Katalysatorbettes wird das N₂O und NO_{X} enthaltende Gas zunächst mit einem gasförmigen Reduktionsmittel, vorzugsweise mit NH₃, gemischt und anschließend zum gleichzeitigen Abbau von N₂O (durch Zersetzung) und NO_{X} (durch Reduktion) bei einer Temperatur von vorzugsweise weniger als 450°C mit der ausgewählten Raumgeschwindigkeit über den Katalysator geleitet.

Im zweiten Katalysatorbett erfolgt eine zusätzliche mindestens 30 %ige, vorzugsweise mindestens 40%ige Minderung des zu Beginn des zweiten Katalysatorbettes vorhandenen N₂O-Gehaltes.

In der erfindungsgemäßen Vorrichtung kommen im ersten und zweiten Katalysatorbett eisenhaltige Zeolithe zum Einsatz. Dabei kann es sich um unterschiedliche Katalysatoren in den jeweiligen Katalysatorbetten oder bevorzugt um den gleichen Katalysator handeln.

Bei einer räumlichen Trennung der Katalysatorbetten ist es möglich, die Temperatur des zweiten Katalysatorbettes bzw. des hierin eintretenden Gastromes durch Wärmeabfuhr oder -zufuhr so einzustellen, dass sie niedriger oder höher als die des ersten Katalysatorbettes ist.

Die Temperatur des Gasstromes im ersten Katalysatorbett, in dem nur das N₂O abgebaut wird, sowie im zweiten Katalysatorbett, in dem N₂O und NOₓ abgebaut werden, liegt beim in der erfindungsgemäßen Vorrichtung bevorzugt durchgeführten Verfahren unterhalb von 500 °C, vorzugsweise im Bereich von 250 bis 500°C, insbesondere bei 300 bis 450°C, und ganz besonders bevorzugt bei 350 bis 450°C. Die Temperatur im zweiten Katalysatorbett entspricht bevorzugt der Temperatur im ersten Katalysatorbett. Die Temperatur im Katalysatorbett lässt sich zweckmässigerweise als arithmetischer Mittelwert der Temperatur des Gasstromes am Ein- und Austritt des Katalysatorbettes bestimmen.

Die Wahl der Betriebstemperatur ist dabei ebenso wie gewählten Raumgeschwindigkeiten bestimmt durch den gewünschten Abbaugrad an N₂O.

Vorzugsweise erfolgen die Auswahl von Temperatur, Volumenstrom und Katalysatormenge im ersten Katalysatorbett derart, dass dort höchstens 90 %, vorzugsweise höchstens 80% und ganz besonders bevorzugt höchstens 70% des zu Beginn des ersten Katalysatorbettes vorhandenen N₂O zersetzt werden.

Vorzugsweise erfolgen die Auswahl von Temperatur, Volumenstrom und Katalysatormenge im zweiten Katalysatorbett derart, dass dort ein weiterer Abbau des N₂O-Gehalts des Gases um mindestens 30%, bezogen auf den N₂O Gehalt am Eingang des zweiten Katalysatorbettes, erfolgt.

Das in der erfindungsgemäßen Vorrichtung bevorzugt durchgeführte Verfahren wird bei einem erhöhten Druck von mindestens 2 bar, vorzugsweise mindestens 3 bar, ganz besonders bevorzugt von 4 bis 25 bar durchgeführt. Die Einspeisung des Reduktionsmittels zwischen dem ersten und dem zweiten Katalysatorbett, d.h. hinter dem ersten und vor dem zweiten Katalysatorbett, erfolgt durch eine geeignete Vorrichtung, wie z.B. einem entsprechenden Druckventil oder entsprechend ausgestalteten Düsen.

In der ersten Reaktionszone wird im allgemeinen eine relativ niedrige Wasserkonzentration bevorzugt, da ein sehr hoher Wassergehalt hohe Betriebstemperaturen (z.B. >500°C) erforderlich machen würde. Diese könnte je nach eingesetztem Zeolithtyp und Betriebsdauer die hydrothermalen Stabilitätsgrenzen des Katalysators überschreiten. Allerdings spielt hier der NOₓ-Gehalt eine entscheidende Rolle, da dieser die Deaktivierung durch Wasser aufheben kann.

Für die NOₓ-Reduktion in der zweiten Reaktionszone spielt ein hoher Wassergehalt eine untergeordnete Rolle, da hier bereits bei relativ niedrigen Temperaturen hohe NOₓ-Abbauraten erzielt werden.

Das Reduktionsmittel wird in einer solchen Menge zugesetzt, wie zur Reduktion des NOₓ benötigt wird. Darunter wird im Rahmen dieser Beschreibung diejenige Menge an Reduktionsmittel verstanden, die notwendig ist, um den Anteil des NOₓ im Gasgemisch vollständig oder bis zur gewünschten Endkonzentration zu reduzieren, ohne dass eine merkliche Reduktion des N₂O stattfindet.

Als Reduktionsmittel im Sinne der Erfindung können solche Stoffe eingesetzt werden, die eine hohe Aktivität und Selektivität zur Reduktion von NO₂ aufweisen und deren Selektivität und Aktivität unter den gewählten Reaktionsbedingungen größer ist als zur möglichen Reduktion von N₂O.

Als Reduktionsmittel im Sinne der Erfindung sind beispielsweise Kohlenwasserstoffe, Wasserstoff, Kohlenmonoxid, Ammoniak oder deren Gemische, wie z.B. Synthesegas, einsetzbar. Besonders bevorzugt wird Ammoniak oder Stoffe, die bei Einbringung Ammoniak freisetzen, wie Harnstoff oder Ammoniumcarbamat.

Die zugesetzte Menge an Reduktionsmittel darf dabei nicht nennenswert größer sein, als bei den gewählten Reaktionsbedingungen zur Reduktion von NOₓ erforderlich ist.

Im Falle von Ammoniak als Reduktionsmittel verwendet man, je nach dem gewünschten Grad des Abbaus des NOₓ-Gehaltes, bis zu maximal 1,2, vorzugsweise 1,0 bis 1,2 molare Anteile an Ammoniak, bezogen auf einen molaren Anteil an NOₓ. Ist ein geringerer Abbaugrad von NOₓ gewünscht, so beträgt die Menge an molaren Anteilen von Ammoniak maximal 1,2*y, bezogen auf einen molaren Anteil an NOₓ; dabei ist y der prozentuale Anteil des NOₓ der in der Reduktion verbraucht werden soll.

Bei Auswahl geeigneter Katalysatoren und Verfahrensbedingungen wirkt das zugesetzte NH₃ nicht als Reduktionsmittel für N₂O, sondern reduziert selektiv das im Abgas enthaltene NOₓ.

Das in der erfindungsgemäßen Vorrichtung bevorzugt durchgeführte Verfahren ermöglicht es damit, die Beseitigung von N₂O und von NOₓ bei einer niedrigen Betriebstemperatur mit geringem Verbrauch an gasförmigen Reduktionsmittel, wie NH₃, durchzuführen, was mit den im Stand der Technik beschriebenen Verfahren bis dahin nicht möglich war.

Dieses ist insbesondere dann von großem Vorteil, wenn große Mengen an N₂O beseitigt werden sollen.

Auch die Art der Einbringung des gasförmigen Reduktionsmittels in den zu behandelnden Gasstrom ist im Sinne der Erfindung frei gestaltbar, solange dieses in Stromrichtung vor dem zweiten Katalysatorbett erfolgt. Sie kann zum Beispiel in der Eintrittsleitung vor dem Behälter für das zweite Katalysatorbett oder unmittelbar vor dem Katalysatorbett erfolgen. Das Reduktionsmittel kann in Form eines Gases oder auch einer Flüssigkeit bzw. wässrigen Lösung eingebracht werden, die im zu behandelnden Gasstrom verdampft.

Erfindungsgemäß verwendete Katalysatoren enthalten im wesentlichen, vorzugsweise > 50 Gew%, insbesondere > 70 Gew.% eines oder mehrerer mit Eisen beladener Zeolithe. So kann beispielsweise neben einem Fe-ZSM-5 Zeolith ein weiterer Eisen enthaltender Zeolith, wie z.B. ein eisenhaltiger Zeolith des MFI-, oder FER-Typs, in dem erfindungsgemäß verwendeten Katalysator enthalten sein.

Darüber hinaus kann der erfindungsgemäß verwendete Katalysator weitere dem Fachmann bekannte Zusatzstoffe, wie z.B. Bindemittel enthalten.

Erfindungsgemäß verwendete Katalysatoren basieren vorzugsweise auf Zeolithen, in die durch einen Festkörper-Ionenaustausch Eisen eingebracht wurde. Üblicherweise geht man hierfür von den kommerziell erhältlichen Ammonium-Zeolithen (z.B. NH₄-ZSM-5) und den entsprechenden Eisensalzen (z.B. FeSO₄ x 7 H₂O) aus und mischt diese auf mechanischem Wege intensiv miteinander in einer Kugelmühle bei Raumtemperatur. (Turek et al.; Appl. Catal. 184, (1999) 249-256; EP-A-0 955 080). Auf diese Literaturstellen wird hiermit ausdrücklich Bezug genommen. Die erhaltenen Katalysatorpulver werden anschließend in einem Kammerofen an der Luft bei Temperaturen im Bereich von 400 bis 600°C kalziniert. Nach dem Kalzinieren werden die eisenhaltigen Zeolithe in destilliertem Wasser intensiv gewaschen und nach Abfiltrieren des Zeolithen getrocknet. Abschließend werden die so erhaltenen eisenhaltigen Zeolithe mit den geeigneten Bindemitteln versetzt und gemischt und beispielsweise zu zylindrischen Katalysatorkörpern extrudiert. Als Bindemittel eignen sich alle üblicherweise verwendeten Binder, die gebräuchlichsten sind hierbei Aluminiumsilikate wie z.B. Kaolin.

Gemäß der vorliegenden Erfindung sind die verwendbaren Zeolithe mit Eisen beladen. Der Eisengehalt kann dabei bezogen auf die Masse an Zeolith bis zu 25% betragen, vorzugsweise jedoch 0,1 bis 10%.

Vorzugsweise handelt es sich um mit Eisen beladene Zeolithe vom Typ MFI, BEA, FER, MOR, FAU und/oder MEL, insbesondere vom Typ ZSM-5.

In einer bevorzugten Ausführungsform werden zumindest im zweiten Katalysatorbett mit Eisen beladene Zeolithe verwendet, deren Kristallstruktur keine Poren bzw. Kanäle mit kristallographischen Durchmessern größer gleich 7,0 Ångstrom aufweist.

Dazu zählen mit Eisen beladene Zeolithe vom Typ MFI, FER und/oder MEL, insbesondere vom Typ ZSM-5.

Im in der erfindungsgemäßen Vorrichtung durchgeführten Verfahren ist auch der Einsatz solcher Zeolithe eingeschlossen, in welchen das Gitteraluminium teilweise durch ein oder mehrere Elemente isomorph substituiert ist, beispielsweise durch ein oder mehrere Elemente ausgewählt aus B, Be, Ga, Fe, Cr, V, As, Sb und Bi ersetzt ist. Ebenso eingeschlossen ist der Einsatz von Zeolithen, bei denen das Gittersilicium durch ein oder mehrere Elemente isomorph substituiert ist, beispielsweise durch ein oder mehrere Elemente ausgewählt aus Ge, Ti, Zr und Hf ersetzt ist.

Genaue Angaben zum Aufbau oder Struktur der erfindungsgemäß eingesetzten Zeolithe werden im Atlas of Zeolite Structure Types, Elsevier, 4th revised Edition 1996, gegeben, auf den hiermit ausdrücklich Bezug genommen wird.

Ganz besonders bevorzugt kommen im in der erfindungsgemäßen Vorrichtung durchgeführten Verfahren die weiter oben definierten Zeolith-Katalysatoren zum Einsatz, die mit Wasserdampf behandelt worden sind ("gesteamte" Katalysatoren). Durch eine derartige Behandlung wird das Gitter des Zeolithen dealuminiert; diese Behandlung ist dem Fachmann an sich bekannt. Überraschenderweise zeichnen sich diese hydrothermal behandelte Zeolith-Katalysatoren im erfindungsgemäßen Verfahren durch eine besonders hohe Aktivität aus.

Bevorzugt werden hydrothermal behandelte Zeolith-Katalysatoren eingesetzt, die mit Eisen beladen worden sind und bei denen das Verhältnis von Extra-Gitter-Aluminium zu Gitter-Aluminium mindestens 1 : 2 beträgt, vorzugsweise 1:2 bis 20:1 beträgt. Der Wassergehalt des Reaktionsgases liegt vorzugsweise im Bereich von <25 Vol.%, insbesondere im Bereich <15 Vol.%. Ein niedriger Wassergehalt ist im allgemeinen zu bevorzugen.

Im allgemeinen wird eine relativ niedrige Wasserkonzentration bevorzugt, da höhere Wassergehalte höhere Betriebstemperaturen erforderlich machen würden. Diese könnte je nach eingesetztem Zeolithtyp und Betriebsdauer die hydrothermalen Stabilitätsgrenzen des Katalysators überschreiten und ist somit dem jeweils gewählten Einzelfall anzupassen.

Auch die Anwesenheit von CO₂ sowie von anderen desaktivierenden Bestandteilen des Reaktionsgases, die dem Fachmann bekannt sind, sollten nach Möglichkeit minimiert werden, da sich diese negativ auf den N₂O-Abbau auswirken würden.

Das in der erfindungsgemäßen Vorrichtung bevorzugt durchgeführte Verfahren arbeitet auch in Gegenwart von O₂, da die erfindungsgemäß verwendeten Katalysatoren entsprechende Selektivitäten aufweisen, die bei Temperaturen <500°C eine Reaktion des gasförmigen Reduktionsmittels, wie NH₃, mit O₂ unterdrücken.

All diese Einflussfaktoren, sowie die gewählte Katalysatorbelastung d.h. Raumgeschwindigkeit sind bei der Wahl der geeigneten Betriebstemperatur der Reaktionszone zu berücksichtigen.

Die erfindungsgemäße Vorrichtung kann besonders bei der Salpetersäureproduktion, bei Kraftwerksabgasen oder bei Gasturbinen zum Einsatz kommen. In diesen Prozessen fallen stickoxidhaltige Prozeß- und Abgase an, die mit Hilfe der hier aufgezeigten Vorrichtung kostengünstig entstickt werden können. Die erfindungsgemäße Vorrichtung wird zweckmäßigerweise im Restgas der Salpetersäureproduktion nach dem Absorptionsturm eingesetzt.

Die Ausführung der Katalysatorbetten ist im Sinne der Erfindung frei gestaltbar. So kann beispielsweise der Katalysator oder die Katalysatoren in einem axial oder vorzugsweise radial durchströmten Katalysatorbett angeordnet sein, die in einem oder mehreren Behältern untergebracht sind.

Gegenstand der Erfindung ist eine Vorrichtung zur Minderung des Gehalts von NOₓ und N₂O in Gasen, insbesondere in Prozessgasen und Abgasen, umfassend:
1. A) zwei hintereinander geschaltete Katalysatorbetten enthaltend einen oder mehrere mit Eisen beladene Zeolithe, welche von dem NOₓ und N₂O enthaltenden Gas durchströmt werden, und die beide in einem Behälter angeordnet sind,
2. B) eine zwischen den Katalysatorbetten angeordnete Vorrichtung zur Einbringung eines gasförmigen Reduktionsmittels in den Strom des NOₓ und N₂O enthaltenden Gases, umfassend einen Mischer, welcher ein statischer Mischer mit entsprechenden Einbauten ist oder ein dynamischer Mischer, durch den das Gas nach Durchströmung des ersten Katalysatorbettes geleitet wird, und umfassend eine Zuleitung für Reduktionsmittel, die in den Raum hinter dem ersten Katalysatorbett und vor oder in den Mischer mündet, wobei das zu reinigende Gas nach Verlassen des Mischers durch das zweite Katalysatorbett geleitet wird und wobei
3. C) mindestens eines der Katalysatorbetten in der Form eines Hohlzylinders ausgestaltet ist, der von dem NOₓ und N₂O enthaltenden Gas radial durchströmt wird.

In der erfindungsgemäßen Vorrichtung sind beide Katalysatorbetten in einem Behälter angeordnet, was die Apparatekosten deutlich senkt.

Erfindungsgemäß wird mindestens ein Katalysatorbett, bevorzugt beide Katalysatorbetten, vom zu reinigenden Gas radial durchströmt, was einen deutlich geminderten Druckverlust verursacht.

Das mindestens eine radial durchströmte Katalysatorbett ist in der Form eines Hohlzylinders ausgestaltet. Radial durchströmte Katalysatorbetten können übereinander angeordnet sein oder es kann eine Kombination von axial und radial durchströmten Katalysatorbetten gewählt werden. Dabei ist durch geeignet angebrachte Trennflächen zwischen den Katalysatorbetten der Weg des Gases so vorzugeben, dass zunächst das erste und sodann das zweite Katalysatorbett durchströmt wird.

Im Fall von radial durchströmten Katalysatorbetten können diese auch in Form von konzentrisch ineinander angeordneten Hohlzylindern vorliegen. Auch bei dieser Ausführungsform ist darauf zu achten, dass durch geeignet angebrachte Trennflächen zwischen den Katalysatorbetten der Weg des Gases so vorgegeben wird, dass zunächst das erste und sodann das zweite Katalysatorbett durchströmt wird.

Die Strömungsrichtung des Gases kann im Radialkorbreaktor von innen nach außen oder von außen nach innen verlaufen.

In einer bevorzugten Ausführungsform liegen zwei radial durchströmte Katalysatorbetten, beispielsweise in Form von zwei Hohlzylindern, mit verschiedenen Abmessungen vor, wobei das Außenmaß des einen Katalysatorbettes kleiner ist als das Innenmaß des anderen Katalysatorbettes und beide Katalysatorbetten konzentrisch zueinander angeordnet sind, und wobei durch geeignet angebrachte Trennflächen zwischen den Katalysatorbetten der Weg des Gases so vorgegeben wird, dass zunächst das erste und sodann das zweite Katalysatorbett durchströmt wird.

In der erfindungsgemäßen Vorrichtung wird das Gas nach Durchströmung des ersten Katalysatorbettes in einen Mischer geleitet, der vorzugsweise im Zentrum der Vorrichtung angeordnet ist.

Der Mischer dient zur innigen Verteilung des Reduktionsmittels im Gasstrom. Der Mischer ist ein statischer Mischer mit entsprechenden Einbauten oder ein dynamischer Mischer.

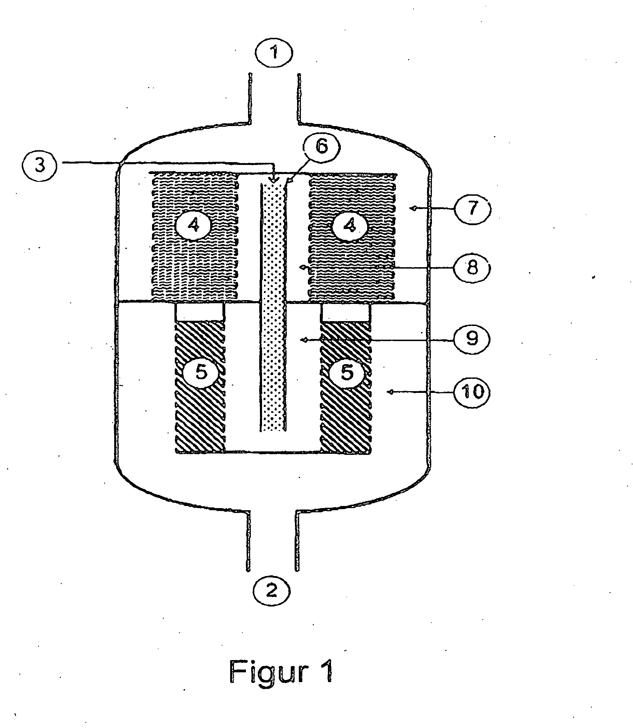

Figuren 1 bis 6 beschreiben bevorzugte Ausführungsformen der erfindungsgemäßen Vorrichtung im Längsschnitt.

Figur 1 stellt eine erfindungsgemäße Vorrichtung mit Gaseintritt (1) und Gasaustritt (2) dar. Im oberen, dem Gaseintritt (1) zugewandten Innenraum ist das erste Katalysatorbett in Form eines Hohlzylinders (4) angeordnet und befindet sich auf einer Trennwand, die den Raum der Vorrichtung in zwei Hälften aufteilt. Ferner ist die obere Seitenfläche des Hohlzylinders (4) durch eine Trennwand verschlossen in den Ringspalt des Austritts (8) des ersten Katalysatorbettes radial durch das erste Katalysatorbett. Von dort strömt es in den Mischer (6), an dessen Eintrittsseite eine Eintrittsleitung (3) für das Reduktionsmittel mündet. Mischer (6) wird durch die Trennwand geführt und das Gas strömt sodann durch den Ringspalt des Eintritts (9) des unter dem ersten Katalysatorbett (4) angeordneten zweiten Katalysatorbettes (5) in den Ringspalt des Austritts (10) des zweiten Katalysatorbettes (5) radial durch das zweite Katalysatorbett. Von dort verlässt das gereinigte Gas die Vorrichtung über den Gasaustritt (2).

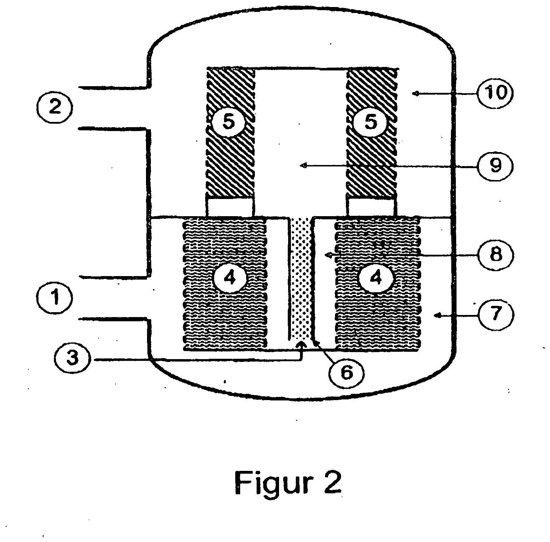

Figur 2 beschreibt eine ähnliche Ausführungsform wie Figur 1 mit der Abänderung, dass das erste Katalysatorbett (4) unterhalb des zweiten Katalysatorbettes (5) angeordnet ist und dass Gaseintritt (1) und Gasaustritt (2) seitlich in der Vorrichtung angeordnet sind. Die übrigen Bezugszeichen haben die bei der Beschreibung von Figur 1 aufgeführte Bedeutung.

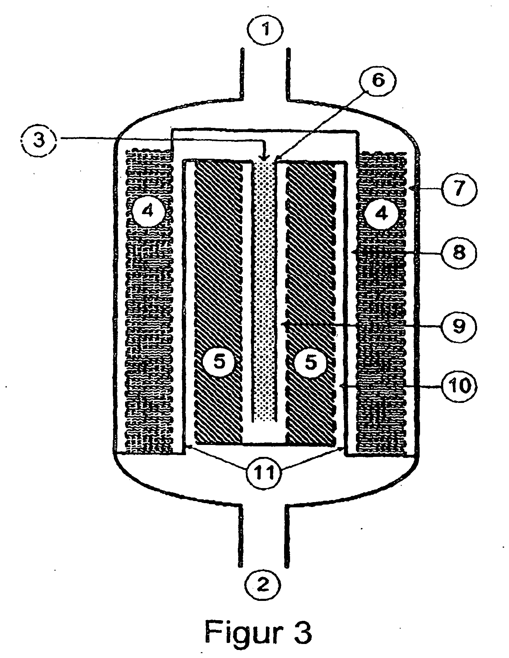

Figur 3 stellt eine weitere Ausführungsform der erfindungsgemäßen Vorrichtung mit Gaseintritt (1) und Gasaustritt (2) dar. Erstes Katalysatorbett (4) und zweites Katalysatorbett (5) sind hier in Form von zwei konzentrisch ineinander angeordneten Hohlzylindern ausgestaltet. Das erste Katalysatorbett (4) befindet sich außerhalb einer konzentrischen Trennwand (11), die die untere Seitenfläche des Katalysatorbettes (4), die Ringspalte (7) und (8) sowie den Innenraum der Vorrichtung und die obere Seitenfläche des zweiten Katalysatorbettes (5) abschließt. Das zu reinigende Gas tritt durch den Gaseintritt (1) in die Vorrichtung ein, durchströmt das erste Katalysatorbett vom Ringspalt Eintritt (7) radial von außen nach innen in den Ringspalt Austritt (8). Von dort strömt es in den Mischer (6), an dessen Eintrittsseite eine Eintrittsleitung (3) für das Reduktionsmittel mündet. Mischer (6) mündet in den Innenraum des zweiten Katalysatorbetts (5), das nach unter durch eine Trennwand verschlossen ist. Das Gas strömt sodann durch den Ringspalt des Eintritts (9) des zweiten Katalysatorbettes (5) in den Ringspalt des Austritts (10) des zweiten Katalysatorbettes (5) radial nach außen durch das zweite Katalysatorbett. Von dort verlässt das gereinigte Gas die Vorrichtung über den Gasaustritt (2).

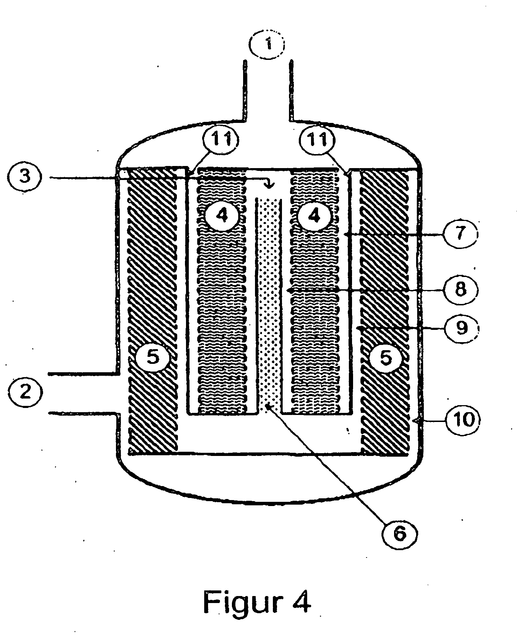

Figur 4 beschreibt eine ähnliche Ausführungsform wie Figur 3 mit der Abänderung, dass das erste Katalysatorbett (4) den inneren Hohlzylinder bildet und das zweite Katalysatorbett (5) den äußeren Hohlzylinder bildet. Die übrigen Bezugszeichen haben die bei der Beschreibung von Figur 3 aufgeführte Bedeutung.

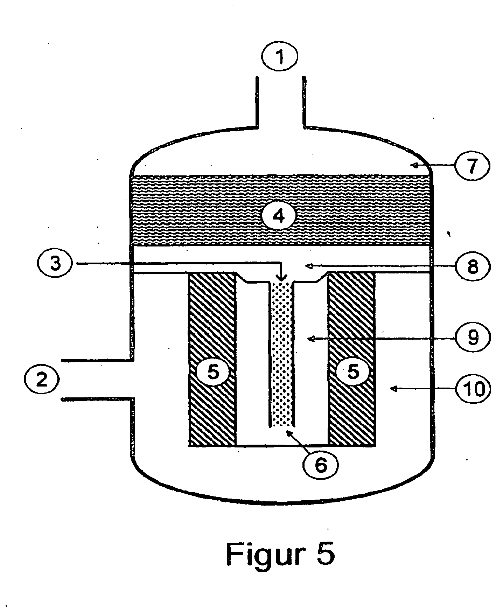

Figur 5 beschreibt eine Ausführungsform, in der ein axial und ein radial durchströmtes Katalysatorbett vorgesehen sind. Das Gas strömt über den Gaseintritt (1) axial durch das erste Katalysatorbett (4) und in den Mischer (6). In der Vorrichtung befindet sich eine Trennwand, die den Raum der Vorrichtung in zwei Hälften aufteilt. An der Eintrittsseite des Mischers (6) mündet eine Eintrittsleitung (3) für das Reduktionsmittel. Von Mischer (6) strömt das Gas in den Ringspalt des Eintritts (9) des zweiten Katalysatorbettes (5) und durch dieses radial in den Ringspalt des Austritts (10). Von dort verlässt das gereinigte Gas die Vorrichtung über den Gasaustritt (2).

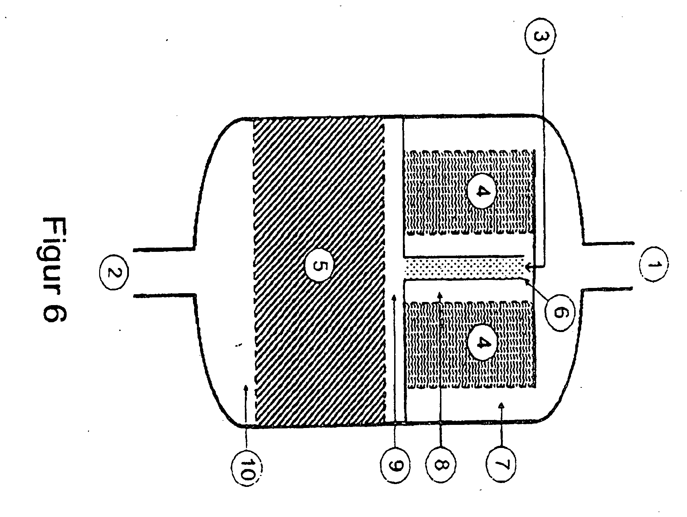

Figur 6 beschreibt eine ähnliche Ausführungsform wie Figur 5 mit der Abänderung, dass das erste Katalysatorbett (4) radial und das zweite Katalysatorbett (5) axial durchströmt werden. Die übrigen Bezugszeichen haben die bei der Beschreibung von Figur 3 aufgeführte Bedeutung.

Ein in der erfindungsgemäßen Vorrichtung bevorzugt zum Einsatz kommendes Verfahren wird durch das nachfolgende Beispiel erläutert.

Als Katalysator wurde ein mit Eisen beladener Zeolith vom Typ ZSM-5 eingesetzt. Die Herstellung des Fe-ZSM-5-Katalysators erfolgte durch Festkörper-Ionentausch ausgehend von einem kommerziell verfügbaren Zeolith in Ammonium-Form (ALSI-PENTA, SM27). Detaillierte Angaben zur Präparation können entnommen werden aus: M. Rauscher, K. Kesore, R. Mönnig, W. Schwieger, A. Tißler, T. Turek: "Preparation of highly active Fe-ZSM-5 catalyst through solid state ion exchange for the catalytic decomposition of N2O" in Appl. Catal. 184 (1999) 249-256.

Die Katalysatorpulver wurden an der Luft für 6h bei 823K kalziniert, gewaschen und über Nacht bei 383K getrocknet. Nach Zusatz entsprechender Binder folgte die Extrusion zu zylindrischen Katalysatorkörpern.

Als Vorrichtung zur Minderung des NOₓ- und N₂O-Gehaltes kamen zwei hintereinander geschaltete Rohrreaktoren zum Einsatz, welche jeweils mit einer solchen Menge an obigem Katalysator befüllt waren, dass bezogen auf den eintretenden Gasstrom jeweils eine Raumgeschwindigkeit von 15.000 h⁻¹ resultierte. Zwischen den beiden Reaktionszonen erfolgt die Zugabe von NH₃-Gas. Die Betriebstemperatur der Reaktionszonen wurde durch Beheizung eingestellt. Die Analyse der in die Reaktoren ein- und austretenden Gasströme erfolgte mit Hilfe eines FTIR-Gasanalysators.

Bei Eingangskonzentrationen von 1.500 ppm N₂O, 350 ppm NOₓ, 3.000 ppm H₂O und 1,2 %Vol O₂ in N₂ und einer intermediären Zugabe von NH₃ resultierten bei einer einheitlichen Betriebstemperatur von 425°C und einem Betriebsdruck von 6,5 bar die in der folgenden Tabelle aufgelisteten Umsatzergebnisse für N₂O, NOₓ und NH₃

**Tabelle**

| | Eingangskonzentration | Austrittskonzentration | Umsatz |
|---|---|---|---|
| N₂O | 1.500 ppm (Reaktor 1) | 540 ppm (Reaktor 1) | 64 % |
| NOₓ (x=1-2) | 360 ppm (Reaktor 2) | 80 ppm (Reaktor 2) | 78 % |
| NH₃ | 310 ppm^{*)} (Reaktor 2) | 0 ppm (Reaktor 2) | 100 % |
| N₂O | 540 ppm (Reaktor 2) | 190 ppm (Reaktor 2) | 65 % |
| ^{*)} zugegeben zwischen erstem und zweiten Reaktor | | | |

## Patentansprüche

1. Vorrichtung zur Minderung des Gehalts von NOₓ und N₂O in Gasen, insbesondere in Prozessgasen und Abgasen, umfassend:
A) zwei hintereinander geschaltete Katalysatorbetten enthaltend einen oder mehrere mit Eisen beladene Zeolithe, welche von dem NOₓ und N₂O enthaltenden Gas durchströmt werden und die beide in einem Behälter angeordnet sind,
B) eine zwischen den Katalysatorbetten angeordnete Vorrichtung zur Einbringung eines gasförmigen Reduktionsmittels in den Strom des NOₓ und N₂O enthaltenden Gases, umfassend einen Mischer, welcher ein statischer Mischer mit entsprechenden Einbauten ist oder ein dynamischer Mischer, durch den das Gas nach Durchströmung des ersten Katalysatorbettes geleitet wird, und umfassend eine Zuleitung für Reduktionsmittel, die in den Raum hinter dem ersten Katalysatorbett und vor oder in den Mischer mündet, wobei das zu reinigende Gas nach Verlassen des Mischers durch das zweite Katalysatorbett geleitet wird und wobei
C) mindestens eines der Katalysatorbetten in der Form eines Hohlzylinders ausgestaltet ist, der von dem NOₓ und N₂O enthaltenden Gas radial durchströmt wird.

2. Vorrichtung nach Anspruch 1, **dadurch gekennzeichnet, dass** beide Katalysatorbetten vom NOₓ und N₂O enthaltenden Gas radial durchströmt werden.

3. Vorrichtung nach Anspruch 1, **dadurch gekennzeichnet, dass** zwei radial durchströmte Katalysatorbetten übereinander angeordnet sind oder dass eine Kombination von übereinander angeordneten axial und radial durchströmten Katalysatorbetten vorliegt, wobei durch geeignet angebrachte Trennflächen zwischen den Katalysatorbetten der Weg des Gases so vorgegeben wird, dass zunächst das erste und sodann das zweite Katalysatorbett durchströmt wird.

4. Vorrichtung nach Anspruch 1, **dadurch gekennzeichnet, dass** zwei radial durchströmte Katalysatorbetten mit verschiedenen Abmessungen vorliegen, wobei das Außenmaß des einen Katalysatorbettes kleiner ist als das Innenmaß des anderen Katalysatorbettes und beide Katalysatorbetten konzentrisch zueinander angeordnet sind, und wobei durch geeignet angebrachte Trennflächen zwischen den Katalysatorbetten der Weg des Gases so vorgegeben wird, dass zunächst das erste und sodann das zweite Katalysatorbett durchströmt wird.

5. Vorrichtung nach Anspruch 1, **dadurch gekennzeichnet, dass** das Gas nach Durchströmung des ersten Katalysatorbettes in einen im Zentrum der Vorrichtung angeordneten Mischer geleitet wird.

6. Vorrichtung nach Anspruch 1, **dadurch gekennzeichnet, dass** im ersten und zweiten Katalysatorbett der gleiche Katalysator verwendet wird.

7. Vorrichtung nach Anspruch 1, **dadurch gekennzeichnet, dass** der oder die mit Eisen beladenen Zeolithe vom Typ MFI, BEA, FER, MOR, FAU und/oder MEL sind.

8. Vorrichtung nach Anspruch 7, **dadurch gekennzeichnet, dass** der mit Eisen beladene Zeolith vom Typ MFI ist.

9. Vorrichtung nach Anspruch 1, **dadurch gekennzeichnet, dass** der mit Eisen beladene Zeolith ein Fe-ZSM-5 ist.

10. Vorrichtung nach Anspruch 1, **dadurch gekennzeichnet, dass** in mindestens einem Katalysatorbett mit Eisen beladene Zeolithe eingesetzt werden, die mit Wasserdampf behandelt worden sind.

11. Vorrichtung nach Anspruch 1, **dadurch gekennzeichnet, dass** als Katalysatoren in mindestens einem Katalysatorbett mit Eisen beladene Zeolithe eingesetzt werden, bei denen das Verhältnis von Extra-Gitter-Aluminium zu Gitter-Aluminium mindestens 0,5 beträgt.

## Claims

1. An apparatus for reducing the content of NOₓ and N₂O in gases, in particular in process gases and offgases, which comprises:
A) two catalyst beds which are connected in series and comprise one or more zeolites loaded with iron and through which the NOₓ- and N₂O-containing gas flows and both of which are arranged in a vessel,
B) an apparatus arranged between the catalyst beds for introducing a gaseous reducing agent into the stream of the NOₓ- and N₂O-containing gas, which comprises a mixer which is a static mixer having appropriate internals or a dynamic mixer and through which the gas is passed after flowing through the first catalyst bed and comprising a feed line for reducing agent which opens into the space downstream of the first catalyst bed and upstream of or in the mixer, where the gas to be purified is passed through the second catalyst bed after leaving the mixer and where
C) at least one of the catalyst beds is configured in the form of a hollow cylinder through which the NOₓ- and N₂O-containing gas flows radially.

2. The apparatus as claimed in claim 1, wherein the NOₓ- and N₂O-containig gas flows radially through the two catalyst beds.

3. The apparatus as claimed in claim 1, wherein two catalyst beds through which radial flow occurs are superposed or a combination of superposed catalyst beds through which axial and radial flow occurs are/is present, where the path of the gas is predetermined by means of suitably installed separation plates between the catalyst beds so that flow occurs firstly through the first catalyst bed and then through the second catalyst bed.

4. The apparatus as claimed in claim 1, wherein two catalyst beds through which radial flow occurs having different dimensions are present, where the outer dimension of one catalyst bed is smaller than the interior dimension of the other catalyst bed and the two catalyst beds are arranged concentrically relative to one another and the path of the gas is predetermined by means of suitably installed separation plates between the catalyst beds so that flow occurs firstly through the first catalyst bed and then through the second catalyst bed.

5. The apparatus as claimed in claim 1, wherein the gas is passed into a mixer located in the center of the apparatus after flowing through the first catalyst bed.

6. The apparatus as claimed in claim 1, wherein the same catalyst is used in the first catalyst bed and in the second catalyst bed.

7. The apparatus as claimed in claim 1, wherein the zeolite or zeolites loaded with iron are of the MFI, BEA, FER, MOR, FAU and/or MEL type.

8. The apparatus as claimed in claim 7, wherein the zeolite loaded with iron is of the MFI type.

9. The apparatus as claimed in claim 1, wherein the zeolite loaded with iron is an Fe-ZSM-5.

10. The apparatus as claimed in claim 1, wherein zeolites loaded with iron which have been treated with steam are used in at least one catalyst bed.

11. The apparatus as claimed in claim 1, wherein zeolites loaded with iron, in which the ratio of extralattice aluminum to lattice aluminum is at least 0.5, are used as catalysts in at least one catalyst bed.

## Revendications

1. Dispositif pour réduire la teneur en NOₓ et N₂O dans des gaz, en particulier des gaz de procédés et des gaz d'échappement, comprenant :
A) deux lits de catalyseur, branchés l'un derrière l'autre, contenant une ou plusieurs zéolithes chargées avec du fer, parcourus par un écoulement de gaz contenant du NOₓ et du N₂O et tous deux disposés dans un récipient,
B) un dispositif, disposé entre les lits de catalyseur, pour introduire un agent de réduction sous forme gazeuse, dans le flux de gaz contenant du NOₓ et du N₂O, comprenant un mélangeur, lequel est un mélangeur statique avec des installations correspondantes ou un mélangeur dynamique, à travers lequel le gaz est guidé après s'être écoulé à travers le premier lit de catalyseur, et comprenant une conduite d'alimentation pour un agent de réduction, débouchant dans l'espace se trouvant en aval du premier lit de catalyseur et en amont ou dans le mélangeur, le gaz à épurer, après avoir quitté le mélangeur, étant passé à travers le deuxième lit de catalyseur, et où
C) au moins l'un des lits de catalyseur est réalisé sous la forme d'un cylindre creux, parcouru radialement par un écoulement du gaz contenant du NOₓ et du N₂O.

2. Dispositif selon la revendication 1, **caractérisé en ce que** les deux lits de catalyseurs sont traversés radialement par un écoulement de gaz contenant du NOₓ et du N₂O.

3. Dispositif selon la revendication 1, **caractérisé en ce que** deux lits de catalyseur, traversés radialement par un écoulement, sont disposés l'un au-dessus de l'autre, ou **en ce qu'**une combinaison de lits de catalyseur, disposés les uns au-dessus des autres, traversés axialement et radialement par un écoulement, est prévue, le chemin du gaz étant prédéterminé au moyen de surfaces de séparation, montées de manière appropriée entre les lits de catalyseur, de manière que, d'abord le premier et, ensuite, le deuxième lit de catalyseur soient traversés par un écoulement.

4. Dispositif selon la revendication 1, **caractérisé en ce que** sont prévus deux lits de catalyseur, traversés radialement par un écoulement, présentant des dimensions différentes, la dimension extérieure d'un premier lit de catalyseur étant plus petite que la dimension intérieure de l'autre lit de catalyseur, et les deux lits de catalyseur étant disposés concentriquement l'un par rapport à l'autre et, le chemin du gaz étant prédéterminé au moyen de surfaces de séparation, montées de manière appropriée entre les lits de catalyseur, de manière que, d'abord le premier et, ensuite, le deuxième lit de catalyseur soient traversés par un écoulement.

5. Dispositif selon la revendication 1, **caractérisé en ce que**, après s'être écoulé à travers le premier lit de catalyseur, le gaz est dirigé dans un mélangeur disposé au centre du dispositif.

6. Dispositif selon la revendication 1, **caractérisé en ce que** le même catalyseur est utilisé dans le premier et le deuxième lit de catalyseur.

7. Dispositif selon la revendication 1, **caractérisé en ce que** la ou les zéolithes chargées avec du fer sont du type MFI, BEA, FER, MOR, FAU et/ou MEL.

8. Dispositif selon la revendication 7, **caractérisé en ce que** la zéolithe chargée avec du fer est du type MFI.

9. Dispositif selon la revendication 1, **caractérisé en ce que** la zéolithe chargée avec du fer est une Fe-ZSM-5.

10. Dispositif selon la revendication 1, **caractérisé en ce que** des zéolithes chargées avec du fer, traitées à la vapeur d'eau sont incorporées dans au moins un lit de catalyseur.

11. Dispositif selon la revendication 1, **caractérisé en ce que** des zéolithes chargées avec du fer sont incorporés en tant que catalyseurs dans au moins un lit de catalyseur, dans le cas desquelles le rapport entre aluminium partie du réseau cristallin et aluminium hors réseau cristallin est d'au moins 0,5.
